# EUROPEAN PATENT APPLICATION

(11) **EP 3 210 761 A1**
(43) Date of publication of application: **30.08.2017**
(21) Application number: 17152657.7
(22) Date of filing: 23.01.2017
(51) Int. Cl.: B29C 67/00, B33Y 30/00, B33Y 10/00

(54) **SHAPING APPARATUS**

(30) Priority: 25.01.2016 JP 2016011700; 13.12.2016 JP 2016241356
(71) Applicant: FUJI XEROX CO., LTD, Minato-ku Tokyo (JP)
(72) Inventor: KANDA, Torahiko, Ebina-shi, Kanagawa (JP)
(74) Representative: Ward, James Norman

(57) **Abstract**

A shaping apparatus 10 includes: a bench unit 122 that has a light shielding wall 128 around the bench unit 122; a moving unit that moves reciprocally and relatively with respect to the bench unit 122; an ejecting unit 22/24 that is provided at the moving unit and ejects a droplet of a light curable shaping liquid from an ejection surface 22C/24C toward the bench unit 122; an irradiating unit 50 that is provided at the moving unit and irradiates the ejected droplet on the bench unit 122 with irradiation light LB/LA1/LA2; a controller 16 that controls the moving unit, the ejecting unit 22 and the irradiating unit 50, and shapes a three-dimensional object V on the bench unit 122 by repeating ejecting the droplet and curing the droplet performed with the irradiation light LB/LA1/LA2, while moving the moving unit relatively with respect to the bench unit 122; and an emission surface 51A/52A as defined herein.

## Description

### BACKGROUND

### (i) Technical Field

The present invention relates to a shaping apparatus.

### (ii) Related Art

Patent Document 1 discloses a technology related to an inkjet recording device which performs image recording with respect to a recording medium having ink absorption properties. In Patent Document 1, a light curing-type ink applied to a recording medium is disposed such that light is radiated from a second light source after light is radiated from a first light source.

Patent Document 2 discloses a technology related to an image forming method through which an image is formed by curing a light curing-type ink through radiation of light after the light curing-type ink is applied onto a recording medium moving below a line-type ink jet head. In Patent Document 2, light radiated onto the recording medium from a first irradiating unit is radiated parallel to a discharging direction of the light curing-type ink and is condensed so as to cause a radiation range on the recording medium in an advancing direction to have a line shape from 2 mm to 10 mm. The light radiated from the first irradiating unit is light having a wavelength within a range from 300 nm to 390 nm, and illuminance of the light radiated from the first irradiating unit onto the recording medium ranges from 250 mW/cm² to 1,000 mW/cm².

Patent Document 3 discloses a technology related to a printing device which performs printing by using a UV ink. In Patent Document 3, radial rays respectively radiated from a first irradiating unit to a third irradiating unit have peak wavelengths within 350 nm to 450 nm. Color materials included in a third ink and a fourth ink have absorption characteristics of the radial ray in the peak wavelength higher than color materials included in a first ink and a second ink.
[Patent Document 1]
JP-A-2008-073916
[Patent Document 2] JP-A-2010-274584
[Patent Document 3] JP-A-2014-195890

### SUMMARY

When reflected light of the irradiation light curing a shaping liquid is radiated to the ejection surface of the ejecting unit which ejects the droplet of the light curable shaping liquid, there is concern that the shaping liquid on the ejection surface is cured.

The present invention aims to reduce the intensity of reflected light radiated to an ejection surface of an ejecting unit which ejects a droplet of a light curable shaping liquid compared to a case where an end portion of a three-dimensional object shaped on a bench unit on an upstream side in a moving direction is not be able to be irradiated with irradiation light in a state where the ejecting unit is moved to the moving direction so as to be outside from a light shielding wall.

A shaping apparatus of a first aspect of the invention comprises: a bench unit that has a light shielding wall around the bench unit; a moving unit that moves reciprocally and relatively with respect to the bench unit; an ejecting unit that is provided at the moving unit and ejects a droplet of a light curable shaping liquid from an ejection surface toward the bench unit; an irradiating unit that is provided at the moving unit and irradiates the ejected droplet on the bench unit with irradiation light; a controller that controls the moving unit, the ejecting unit and the irradiating unit, and shapes a three-dimensional object on the bench unit by repeating ejecting the droplet and curing the droplet performed with the irradiation light, while moving the moving unit relatively with respect to the bench unit; and an emission surface that is provided at the irradiating unit and emits the irradiation light of which an emission width in a moving direction of the moving unit is set such that, in a state where the ejecting unit is moved to the moving direction to be outside from the light shielding wall, at least an end portion, on an opposite side in the direction to which the ejecting unit is moved, of the three-dimensional object shaped on the bench unit is able to be irradiated with the irradiation light.

A second aspect of the invention is the shaping apparatus according to the first aspect, wherein the emission width is set such that an entire area, in the moving direction, of the three-dimensional object shaped on the bench unit is able to be irradiated with the irradiation light in a state where the ejecting unit is moved to the moving direction to be outside from the light shielding wall.

A third aspect of the invention is the shaping apparatus according to the first or second aspect, wherein a shutter that is able to be lowered more than an upper end portion of the light shielding wall is provided at the moving unit between the ejecting unit and the irradiating unit.

A fourth aspect of the invention is the shaping apparatus according to any one of the first to third aspects, wherein the moving unit is provided with only one flattening unit which comes into contact with the ejected droplet on the bench unit to flatten the three-dimensional object.

A fifth aspect of the invention is the shaping apparatus according to any one of the first to fourth aspects, wherein the irradiating unit can emit low-intensity light lower in intensity than the irradiation light, and the controller irradiates the three-dimensional object with the low-intensity light before the ejecting unit is moved to be outside from the light shielding wall.

A sixth aspect of the invention is the shaping apparatus according to the fifth aspect, wherein the irradiating unit reduces illuminance of the irradiation light to form the low-intensity light.

A seventh aspect of the invention is the shaping apparatus according to the fifth aspect, wherein the irradiating unit reduces the emission width of the irradiation light from the emission surface to form the low-intensity light.

An eighth aspect of the invention is the shaping apparatus according to any one of the fifth to seventh aspects, wherein the irradiating unit includes element arrays in the moving direction, each of the element arrays including light emitting elements arrayed in line in a direction perpendicular to the moving direction.

According to the first aspect of the invention, the intensity of reflected light radiated to the ejection surface of the ejecting unit which ejects the droplet of the light curable shaping liquid is reduced compared to a case where the end portion, on the upstream side in the moving direction (on an opposite side in the direction to which the ejecting unit is moved), of the three-dimensional object shaped on the bench unit is not be able to be irradiated with the irradiation light in a state where the ejecting unit is moved to the moving direction to be outside from the light shielding wall.

According to the second aspect of the invention, the intensity of the reflected light radiated to the ejection surface of the ejecting unit which ejects the droplet of the light curable shaping liquid is reduced compared to a case where the entire area of the three-dimensional object in the moving direction shaped on the bench unit is not able to be irradiated in a state where the ejecting unit moves to the outside from the light shielding wall.

According to the third aspect of the invention, the intensity of the reflected light radiated to the ejection surface of the ejecting unit which ejects the droplet of the light curable shaping liquid is reduced compared to a case where there is provided the shutter which is lowered to only an extent above the upper end portion of the light shielding wall.

According to the fourth aspect of the invention, precision in flattening is improved compared to a case where multiple flattening units are provided at the moving unit.

According to the fifth aspect of the invention, resolution of the three-dimensional object can be improved compared to a case where the three-dimensional object is not irradiated with low-intensity light before the ejecting unit is moved to be outside from the light shielding wall.

According to the sixth aspect of the invention, the irradiation light can be formed into the low-intensity light easily by reduction of the illuminance thereof.

According to the seventh aspect of the invention, the irradiation light can be formed into the low-intensity light easily by reduction of the emission width thereof from the emission surface.

According to the eighth aspect of the invention, the irradiating unit can emit both the irradiation light and the low-intensity light easily compared to a case where the irradiating unit is constituted by an electric bulb.

### BRIEF DESCRIPTION OF THE DRAWINGS

Fig. 1 is a perspective view schematically illustrating a shaping apparatus of a first exemplary embodiment;
Fig. 2 is a view schematically illustrating the shaping apparatus of the first exemplary embodiment viewed from a Y-direction;
Fig. 3 is a block diagram of the shaping apparatus of the first exemplary embodiment;
Figs. 4A and 4B are views respectively illustrating points in time of radiation from a second irradiating unit when a three-dimensional object is shaped while a shaping section main body is relatively moving in a positive A-direction, Fig. 4A is a view before radiation, and Fig. 4B is a view after radiation;
Figs. 5A and 5B are views respectively illustrating points in time of radiation from the second irradiating unit when a three-dimensional object is shaped while the shaping section main body is relatively moving in a negative A-direction, Fig. 5A is a view before radiation, and Fig. 5B is a view after radiation;
Figs. 6A and 6B are views illustrating light shielding shutters and points in time of radiation from the second irradiating unit and a reversal operation thereof when a three-dimensional object having a width narrow in the Y-direction is shaped, Fig. 6A is a view before radiation, and Fig. 6B is a view after radiation; and
Figs. 7A, 7B, and 7C are process views illustrating a process in which a three-dimensional object is shaped while the shaping section main body of the shaping apparatus of a comparative example is relatively moving in the positive A-direction, from Figs. 7A, 7B, and 7C in order.
Figs. 8A and 8B are views respectively illustrating points in time of radiation from the second irradiating unit and scanning therewith when a three-dimensional object is shaped while the shaping section main body of the shaping apparatus of a second exemplary embodiment is relatively moving in the positive A-direction, Fig. 8A is a view in which low-intensity light is radiated, and Fig. 8B is a view in which irradiation light is radiated;
Figs. 9A and 9B are views respectively illustrating points in time of radiation from the second irradiating unit and scanning therewith when a three-dimensional object is shaped while the shaping section main body of the shaping apparatus of the second exemplary embodiment is relatively moving in the negative A-direction, Fig. 9A is a view in which low-intensity light is radiated, and Fig. 9B is a view in which irradiation light is radiated;
Figs. 10A and 10B are views respectively illustrating points in time of radiation from the second irradiating unit and scanning therewith when a three-dimensional object is shaped while the shaping section main body of the shaping apparatus of a third exemplary embodiment is relatively moving in the positive A-direction, Fig. 10A is a view in which low-intensity light is radiated, and Fig. 10B is a view in which irradiation light is radiated;
Figs. 11A and 11B are views respectively illustrating points in time of radiation from the second irradiating unit and scanning therewith when a three-dimensional object is shaped while the shaping section main body of the shaping apparatus of the third exemplary embodiment is relatively moving in the negative A-direction, Fig. 11A is a view in which low-intensity light is radiated, and Fig. 11B is a view in which irradiation light is radiated;
Fig. 12 is a graph illustrating a relationship between a pinning delay time and a resolution.
Fig. 13 is a block diagram of the shaping apparatus of the second exemplary embodiment.
Fig. 14 is a block diagram of the shaping apparatus of the third exemplary embodiment.
Fig. 15 is a plan view illustrating arrays of LEDs in the second irradiating unit of the second exemplary embodiment and those in the second irradiating unit of the third exemplary embodiment.

### DETAILED DESCRIPTION

### «First Exemplary Embodiment»

An example of a shaping apparatus according to a first exemplary embodiment of the present invention will be described. An apparatus width direction of a shaping apparatus 10 will be referred to as an X-direction, an apparatus depth direction of the same will be referred to as a Y-direction, and an apparatus height direction of the same will be referred to as a Z-direction.

### Overall Configuration

First, an overall configuration of the shaping apparatus 10 which is a so-called three-dimensional printer will be described.

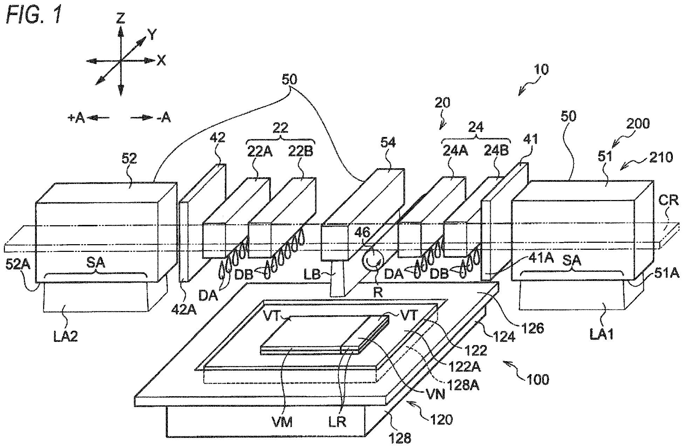

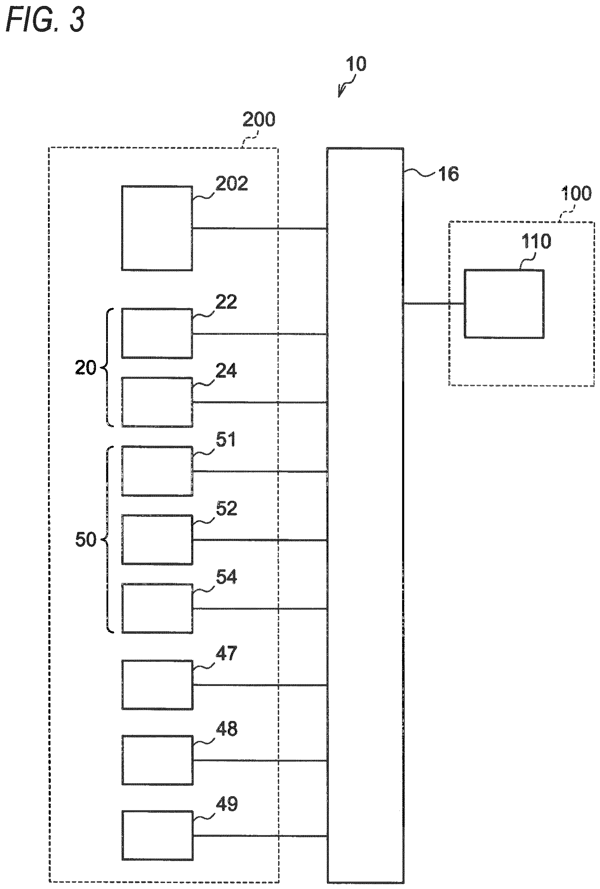

As illustrated in Fig. 1, the shaping apparatus 10 is configured to include a working section 100, a shaping section 200, and a controller 16 (see Fig. 3).

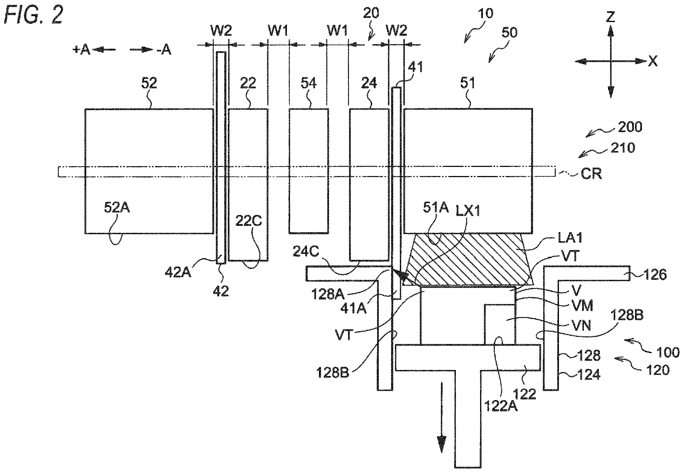

As illustrated in Fig. 1, in the shaping apparatus 10 of the present exemplary embodiment, droplets DA (model material) and droplets DB (support material) are ejected from a first ejecting unit 22 and a second ejecting unit 24 of a shaping section main body 210 (described below), and irradiation light LA1, irradiation light LA2, and irradiation light LB are radiated from a first irradiating unit 54 and second irradiating units 51 and 52 of an irradiator unit 50 (described below). After a three-dimensional object V (see also Fig. 2) is shaped on a workbench 122 (described below) by stacking layers LR which are formed from the droplets DA and DB cured through the radiation, a support portion VN (see also Fig. 2) is removed, thereby realizing a desired shaping object VM (see also Fig. 2). As described below, in the shaping object VM, in a case where there is no portion of which a lower portion is an empty space, the support portion VN is not shaped.

The below-described shaping section main body 210 ejects the droplets DA and DB and radiates the irradiation light LA1, the irradiation light LA2, and the irradiation light LB while moving reciprocally in the X-direction and relatively with respect to the workbench 122. Accordingly, there are cases where the X-direction is expressed as a moving direction. In reciprocating movement, a forward direction will be referred to as a positive A-direction, and a backward direction will be referred to as a negative A-direction.

### Control Section

The controller 16 illustrated in Fig. 3 has a function of controlling the shaping apparatus 10 in its entirety. Working Section

The working section 100 illustrated in Figs. 1 and 2 is configured to include a working section driving unit 110 (see Fig. 3) and a working section main body 120.

### Working Section Main Body

As illustrated in Figs. 1 and 2, the working section main body 120 is configured to include the workbench 122 which is an example of a bench unit, and a wall portion 124 provided around the workbench 122.

The top surface of the workbench 122 is a base surface 122A. The three-dimensional object V (see Fig. 2) is shaped on the base surface 122A. The wall portion 124 is configured to have a light shielding wall 128 enclosing the workbench 122, and a flange portion 126 extending from an upper end portion of the light shielding wall 128 to the outside in the apparatus width direction (X-direction) and to the outside in the apparatus depth direction (Y-direction).

The workbench 122 and the wall portion 124 configured to be included in the working section main body 120 are coated in black such that the irradiation light LA1, the irradiation light LA2, and the irradiation light LB (described below) are unlikely to be reflected. It is desirable that the coating is a dull mat finish.

### Working Section Driving Unit

The working section driving unit 110 illustrated in Fig. 3 has a function of moving the working section main body 120 (see Figs. 1 and 2) in its entirety in the apparatus width direction (X-direction) and moving only the workbench 122 (see Figs. 1 and 2) in the apparatus height direction (Z-direction).

### Shaping Section

As illustrated in Figs. 1 and 2, the shaping section 200 is configured to include the shaping section main body 210 and a shaping section driving unit 202 (see Fig. 3).

### Shaping Section Main Body

The shaping section main body 210 has an ejector unit 20, the irradiator unit 50, light shielding shutters 41 and 42, and a flattening roller 46 which is an example of a flattening unit. The ejector unit 20, the irradiator unit 50, the light shielding shutters 41 and 42, and the flattening roller 46 are provided in a carriage CR. Accordingly, the ejector unit 20, the irradiator unit 50, the light shielding shutters 41 and 42, and the flattening roller 46 configured to be included in the shaping section main body 210 are integrated and move relatively with respect to the workbench 122.

### Ejector Unit

The ejector unit 20 has the first ejecting unit 22 and the second ejecting unit 24 which are disposed in the X-direction apart from each other.

The first ejecting unit 22 and the second ejecting unit 24 respectively have model material ejecting heads 22A and 24A and support material ejecting heads 22B and 24B. The model material ejecting heads 22A and 24A and the support material ejecting heads 22B and 24B are elongated and are disposed while having the longitudinal directions along the apparatus depth direction (Y-direction). The model material ejecting heads 22A and 24A and the support material ejecting heads 22B and 24B are disposed in the apparatus width direction (X-direction) so as to be adjacent to or in contact with each other.

As illustrated in Fig. 1, the model material ejecting heads 22A and 24A eject the droplets DA of the model material which is an example of a shaping liquid shaping the shaping object VM (see Fig. 3) of the three-dimensional object V. The support material ejecting heads 22B and 24B eject the droplets DB of the support material which is an example of the shaping liquid shaping the support portion VN (see Fig. 3) that assists shaping of the three-dimensional object V shaped from the model material.

The model material ejecting heads 22A and 24A and the support material ejecting heads 22B and 24B in the present exemplary embodiment have structures similar to each other except that the type of the shaping liquids to be ejected are different from each other. Multiple nozzles (not illustrated) ejecting the droplets DA and DB are arranged on the bottom surfaces of the model material ejecting heads 22A and 24A and the support material ejecting heads 22B and 24B facing the base surface 122A of the workbench 122, from one end side to the other end side in the longitudinal direction (Y-direction) in a zigzag manner. The nozzles of the support material ejecting heads 22B and 24B are disposed so as to respectively overlap all the nozzles of the model material ejecting heads 22A and 24A in the apparatus width direction. The nozzles of the second ejecting unit 24 are disposed so as to be misaligned from the nozzles of the first ejecting unit 22 by half a pitch in the apparatus depth direction (Y-direction).

In a case where there is no need to distinguish between the model material ejecting heads 22A and 24A and the support material ejecting heads 22B and 24B, description will be given while applying the expression of the first ejecting unit 22 and the second ejecting unit 24. Without distinguishing between the model material ejecting heads 22A and 24A and the support material ejecting heads 22B and 24B, the bottom surfaces on which the nozzles of the first ejecting unit 22 and the second ejecting unit 24 are formed will be referred to as an ejection surface 22C and an ejection surface 24C, as illustrated in Fig. 2.

Here, the model material (droplets DA) and the support material (droplets DB) are examples of the shaping liquid having a light curable resin. The light curable resin in the present exemplary embodiment is an ultraviolet ray curing-type resin having properties of absorbing ultraviolet rays and being cured.

### Irradiator Unit

As illustrated in Figs. 1 and 2, the irradiator unit 50 is configured to radiate the irradiation light LA1, the irradiation light LA2, and the irradiation light LB from the first irradiating unit 54 and the second irradiating units 51 and 52 having plane emission light sources toward the base surface 122A of the workbench 122 from one end side to the other end side in the longitudinal direction (Y-direction). The applied droplets DA (model material) and the applied droplets DB (support material) are cured by being irradiated with the irradiation light LA1, the irradiation light LA2, and the irradiation light LB.

Incidentally, in the present exemplary embodiment, the intensity of the irradiation light LA1 of the second irradiating unit 51 and the intensity of the irradiation light LA2 of the second irradiating unit 52 are made substantially equal to each other, while the intensity of the irradiation light LB of the first irradiating unit 54 is lower than the intensity of the irradiation light LA1, LA2 of each second irradiating unit 51, 52. Therefore, in some cases, curing by irradiation with the irradiation light LB will be referred to as "temporary curing" or "semi-curing". In other cases, "temporary curing" or "semi-curing" by the irradiation light LB will be also referred to as "curing".

### First Irradiating Unit

As illustrated in Figs. 1 and 2, the first irradiating unit 54 is elongated and is disposed at the center portion between the first ejecting unit 22 and the second ejecting unit 24 in the X-direction.

A gap between the first ejecting unit 22 or the second ejecting unit 24, and the first irradiating unit 54 will be referred to as a gap W1.

### Second Irradiating Unit

The second irradiating unit 51 and the second irradiating unit 52 have structures similar to each other except that the disposed positions are different from each other. The second irradiating units 51 and 52 have widths in the moving direction (X-direction) wider than that of the first irradiating unit 54. The second irradiating unit 52 is disposed outside the first ejecting unit 22 in the X-direction (outside in the positive A-direction), and the second irradiating unit 51 is disposed outside the second ejecting unit 24 in the X-direction (outside in the negative A-direction).

Here, emission width SA of emission surfaces 51A and 52A of the second irradiating units 51 and 52 illustrated in Fig. 1 in the moving direction (X-direction) respectively emitting the irradiation light LA1 and the irradiation light LA2 are set such that at least an end portion VT of the three-dimensional object V on an upstream side in the moving direction shaped on the workbench 122 is able to be irradiated with the irradiation light LA1 and the irradiation light LA2 in a state where the first ejecting unit 22 and the second ejecting unit 24 of the ejector unit 20 move to the outside in the X-direction from an inner wall surface 128B of the light shielding wall 128 of the workbench 122, as illustrated in Figs. 2, 4B, and 5B.

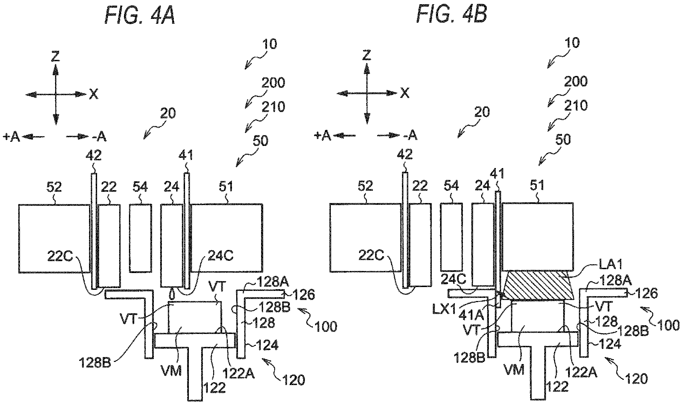

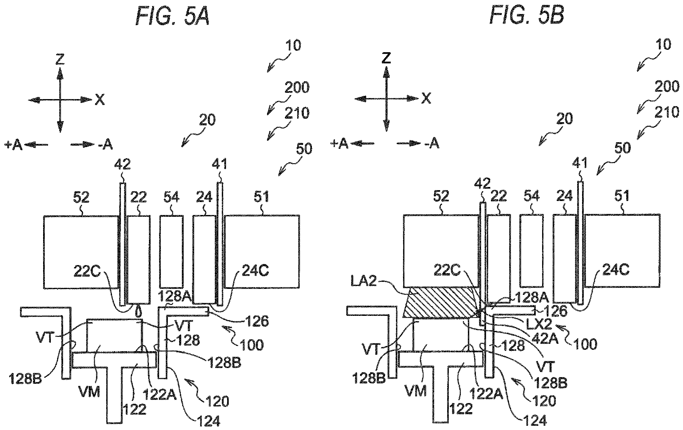

In other words, as illustrated in Fig. 4B, in a state where the second ejecting unit 24 moves to the outside in the positive A-direction from the inner wall surface 128B of the light shielding wall 128, the end portion VT of the three-dimensional object V on the upstream side in the negative A-direction is able to be irradiated with the second irradiating unit 51. As illustrated in Fig. 5B, in a state where the first ejecting unit 22 moves to the outside in the negative A-direction from the inner wall surface 128B of the light shielding wall 128, the end portion VT of the three-dimensional object V on the upstream side in the positive A-direction is able to be irradiated with the second irradiating unit 52.

In the shaping apparatus 10 of the present exemplary embodiment, the emission width SA is set such that the end portion VT of the three-dimensional object V on the upstream side in a case of being shaped closest to the inner wall surface 128B of the light shielding wall 128 is able to be irradiated with the irradiation light LA1 and the irradiation light LA2.

Moreover, in the present exemplary embodiment, the emission width SA is set such that the entire area of the three-dimensional object V in the moving direction shaped on the workbench 122 is able to be irradiated in a state where the first ejecting unit 22 and the second ejecting unit 24 move outside the light shielding wall 128 of the workbench 122 in the X-direction.

A gap between the first ejecting unit 22 and the second irradiating unit 52, and a gap between the second ejecting unit 24 and the second irradiating unit 51 will be referred to as a gap W2. The gap W2 is narrower than the above-described gap W1 between the first ejecting unit 22 or the second ejecting unit 24 and the first irradiating unit 54.

### Light Shielding Shutter

As illustrated in Fig. 1, the light shielding shutters 41 and 42 are respectively provided between the first ejecting unit 22 of the ejector unit 20 and the second irradiating unit 52 of the irradiator unit 50 and between the second ejecting unit 24 of the ejector unit 20 and the second irradiating unit 51 of the irradiator unit 50. The light shielding shutters 41 and 42 move in the apparatus height direction (Z-direction) by a shutter driving mechanism 47 (see Fig. 3). Lower end portions 41A and 42A of the light shielding shutters 41 and 42 move to locations on a side lower than an upper end portion 128A of the light shielding wall 128 (see Figs. 4B and 5B).

### Flattening Roller

As illustrated in Fig. 1, one flattening roller 46 which is an example of the flattening unit is provided at a location between the second ejecting unit 24 and the first irradiating unit 54 in the carriage CR.

The flattening roller 46 is a roller having the longitudinal direction along the Y-direction. The flattening roller 46 of the present exemplary embodiment is configured to be made from metal such as SUS. However, the material thereof is not limited thereto. The flattening roller 46 may be configured to be made from a resin, a rubber material, or the like.

The flattening roller 46 rotates in an R-direction by a rotation mechanism 48 which is controlled by the controller 16 illustrated in Fig. 3.

The flattening roller 46 is lifted and lowered in the apparatus height direction by a lifting and lowering mechanism 49 which is controlled by the controller 16 illustrated in Fig. 3.

The flattening roller 46 is lowered and fixed by the lifting and lowering mechanism 49 when flattening the three-dimensional object V. When not flattening the three-dimensional object V, the flattening roller 46 is withdrawn above by the lifting and lowering mechanism 49.

In Figs. 2, 4A, 4B, 6A, and 6B, the flattening roller 46 is not illustrated.

### Shaping Section Driving Unit

The shaping section driving unit 202 illustrated in Fig. 3 is controlled by the controller 16 so as to move the shaping section main body 210 (see Fig. 1) to a maintenance station (home position, not illustrated) after a shaping operation ends or during the shaping operation, thereby performing various types of maintenance operations such as cleaning for preventing clogging of the nozzles in the first ejecting unit 22 and the second ejecting unit 24.

### Method of Shaping Three-dimensional Object

Subsequently, an example of a method of shaping the three-dimensional object V (shaping object VM) performed by the shaping apparatus 10 of the present exemplary embodiment will be described. First, an overview of the shaping method will be described, and then, the shaping method will be described in detail.

As illustrated in Figs. 1 and 2, the shaping apparatus 10 shapes the three-dimensional object V (see Fig. 2) on the base surface 122A of the workbench 122 by stacking the layers LR (see Fig. 1) which are formed from the model material and the support material cured through radiation of the irradiation light LA and the irradiation light LB.

As illustrated in Fig. 2, the support portion VN is shaped with the support material on a lower side of the three-dimensional object V having a portion of which a lower portion is an empty space, and the three-dimensional object V is shaped while being supported by the support portion VN. Lastly, the support portion VN is removed from the three-dimensional object V, and then, the shaping object VM having a desired shape is completed.

Subsequently, the shaping method will be described in detail.

First, when the controller 16 (see Fig. 3) receives data from an external apparatus and the like, the controller 16 converts data (that is, three-dimensional data) of the three-dimensional object V (the shaping object VM and the support portion VN) included in the data into data (that is, two-dimensional data) of multiple layers LR (see Fig. 1).

Subsequently, the controller 16 causes the working section driving unit 110 to control the working section main body 120 and to move the working section main body 120 in the negative A-direction such that the shaping section main body 210 moves relatively with respect to the workbench 122 in the positive A-direction. Subsequently, the droplets DA (model material) and the droplets DB (support material) are ejected from the model material ejecting head 22A and the support material ejecting head 22B of the first ejecting unit 22 configured to be included in the shaping section main body 210. The controller 16 causes the first irradiating unit 54 having a narrow width to irradiate the applied droplets DA (model material) and the applied droplets DB (support material) with the irradiation light LB. When the droplets DA and the droplets DB are applied to the base surface 122A of the workbench 122 and are moved to locations below the first irradiating unit 54, the droplets DA and the droplets DB are irradiated with the irradiation light LB, thereby being cured. After the droplets DA and the droplets DB pass through, radiation of the irradiation light LB stops.

In the present exemplary embodiment, the droplets DA and DB irradiated with the irradiation light LB are not perfectly cured but semi-cured because the irradiation is performed only once with low intensity. Very small irregularities before the irradiation (before curing) are formed in the surfaces of the semi-cured droplets DA and DB. The very small irregularities in the surfaces of the semi-cured droplets DA and DB which have been irradiated are flattened by the flattening roller 46 which moves relatively in the positive A-direction while rotating in an R-direction. Specifically, the very small irregularities are pressed, smoothed and flattened by the flattening roller 46.

Subsequently, as illustrated in Fig. 4A, the controller 16 causes the model material ejecting head 24A and the support material ejecting head 24B of the second ejecting unit 24 to eject the droplets DA (model material) and the droplets DB (support material) in accordance with a relative movement of the shaping section main body 210 in the positive A-direction (forward direction).

As illustrated in Fig. 4B, the controller 16 causes the second irradiating unit 51 having a wide width to irradiate the applied droplets DA (model material) and the applied droplets DB (support material) with the irradiation light LA1. When the droplets DA and the droplets DB are applied to the base surface 122A of the workbench 122 and are moved to locations below the second irradiating unit 51, the droplets DA and the droplets DB are irradiated with the irradiation light LA1, thereby being cured. Accordingly, a layer LR1 (first layer) is formed through scanning in one direction (positive A-direction).

As illustrated in Fig. 4A, while the second ejecting unit 24 is moving on the inside of the light shielding wall 128 of the workbench 122, the irradiation light LA1 is not radiated from the second irradiating unit 51. As illustrated in Fig. 4B, when the second ejecting unit 24 moves near a location outside the light shielding wall 128 in the positive A-direction and stops for a reversal operation, the irradiation light LA1 is radiated from the second irradiating unit 51.

Before performing radiation, the light shielding shutter 41 is moved until a lower end portion 41A is positioned on a side lower than the upper end portion 128A of the light shielding wall 128.

A layer LR2 (second layer) is formed after the workbench 122 is lowered as much as the thickness of the layer LR while performing an operation of forming the above-described layer LR1 (first layer) by moving the shaping section main body 210 relatively with respect to the workbench 122 in the negative A-direction (backward direction).

In other words, the controller 16 causes the working section main body 120 to move in the positive A-direction such that the shaping section main body 210 moves relatively with respect to the workbench 122 in the negative A-direction. Subsequently, the droplets DA (model material) and the droplets DB (support material) are ejected from the model material ejecting head 24A and the support material ejecting head 24B of the second ejecting unit 24 configured to be included in the shaping section main body 210.

Irregularity which is significantly undulating due to unevenness of the droplets or the like is generated on the surfaces of the droplets DA and DB applied on the layer LR1 (first layer). The significantly undulating irregularity generated before performing radiation is flattened by the flattening roller 46 which moves in the negative A-direction while rotating in the R-direction. Specifically, the irregularity (precisely, convex portions of the irregularity) is attached to the flattening roller 46, thereby being flattened. The droplets DA and DB which are attached to the flattening roller 46 are scraped by a scraper (not illustrated), are removed, and are collected by a collecting mechanism unit (not illustrated).

The controller 16 causes the first irradiating unit 54 having a narrow width to irradiate the applied droplets DA (model material) and the applied droplets DB (support material) with the irradiation light LB. When the droplets DA and the droplets DB are applied to the layer LR1 (first layer) and are moved to locations below the irradiator unit 50, the droplets DA and the droplets DB are irradiated with the irradiation light LB, thereby being cured. After the droplets DA and the droplets DB pass through, radiation of the irradiation light LB stops.

Subsequently, as illustrated in Fig. 5A, the controller 16 causes the model material ejecting head 22A and the support material ejecting head 22B of the first ejecting unit 22 to eject the droplets DA (model material) and the droplets DB (support material) in accordance with a relative movement of the shaping section main body 210 in the negative A-direction (backward direction).

As illustrated in Fig. 5B, the controller 16 causes the second irradiating unit 52 having a wide width to irradiate the applied droplets DA (model material) and the applied droplets DB (support material) with irradiation light LA2. When the droplets DA and the droplets DB are applied to the layer LR1 (first layer) and are moved to locations below the second irradiating unit 52, the droplets DA and the droplets DB are irradiated with the irradiation light LA2, thereby being cured. Accordingly, the layer LR2 (second layer) is formed through scanning in one direction (negative A-direction).

As illustrated in Fig. 5A, while the first ejecting unit 22 is moving on the inside of the light shielding wall 128 of the workbench 122, the irradiation light LA2 is not radiated from the second irradiating unit 52. As illustrated in Fig. 5B, when the first ejecting unit 22 moves near a location outside the light shielding wall 128 in the negative A-direction and stops for a reversal operation, the irradiation light LA2 is radiated from the second irradiating unit 52.

Before performing radiation, the light shielding shutter 42 is moved until a lower end portion 42A is positioned on a side lower than the upper end portion 128A of the light shielding wall 128.

The layers LR for the third and succeeding layers are formed by repeating an operation similar to the above-described operations of forming the layer LR1 (first layer) and the layer LR2 (second layer).

Ejecting the droplets DA and the droplets DB, and curing the droplets DA and the droplets DB performed through radiation of the irradiation light LA1, the irradiation light LA2, and the irradiation light LB are repeated, thereby shaping the three-dimensional object V on the workbench 122 by stacking the layers LR. As described above, the support portion VN is removed from the three-dimensional object V, and then, the shaping object VM having a desired shape is able to be obtained. In the shaping object VM, the support portion VN is not shaped in a case where there is no portion of which a lower portion is an empty space. Therefore, there is a case that the droplets DB are not ejected from the support material ejecting heads 22B and 24B.

### Operation

Subsequently, an operation of the present exemplary embodiment will be described.

As illustrated in Fig. 4A, when the shaping section main body 210 moves relatively in the positive A-direction, while the second ejecting unit 24 is moving on the inside of the light shielding wall 128 of the workbench 122, the irradiation light LA1 is not radiated from the second irradiating unit 51. Therefore, no reflected light LX1 of the irradiation light LA1 is generated, and thus, no reflected light LX1 hits the ejection surface 24C of the second ejecting unit 24.

As illustrated in Fig. 4B, when the second ejecting unit 24 moves near a location outside the light shielding wall 128 in the positive A-direction and stops for a reversal operation, the irradiation light LA1 is radiated from the second irradiating unit 51. Before performing radiation, the light shielding shutter 41 is moved until the lower end portion 41A is positioned on a side lower than the upper end portion 128A of the light shielding wall 128. Accordingly, the reflected light LX1 is blocked by the light shielding wall 128, and thus, the intensity of light hitting the ejection surface 24C of the second ejecting unit 24 is reduced.

Similarly, as illustrated in Fig. 5A, when the shaping section main body 210 moves in the negative A-direction, while the first ejecting unit 22 is moving on the inside of the light shielding wall 128 of the workbench 122, the irradiation light LA2 is not radiated from the second irradiating unit 52. Therefore, no reflected light LX2 of the irradiation light LA2 is generated, and thus, no reflected light LX2 hits the ejection surface 22C of the first ejecting unit 22.

As illustrated in Fig. 5B, when the first ejecting unit 22 moves near a location outside the light shielding wall 128 in the negative A-direction and stops for a reversal operation, the irradiation light LA2 is radiated from the second irradiating unit 52. Before performing radiation, the light shielding shutter 42 is moved until the lower end portion 42A is positioned on a side lower than the upper end portion 128A of the light shielding wall 128. Accordingly, the reflected light LX2 is blocked by the light shielding wall 128, and thus, the intensity of light hitting the ejection surface 22C of the first ejecting unit 22 is reduced.

In this manner, compared to a case where radiation from the second irradiating units 51 and 52 is performed while the first ejecting unit 22 and the second ejecting unit 24 are moving on the inside of the light shielding wall 128 of the workbench 122 (see a comparative example described below), the intensity of the reflected light LX1 and the reflected light LX2 radiated to the ejection surface 22C of the first ejecting unit 22 and the ejection surface 24C of the second ejecting unit 24 is reduced.

When the irradiation light LA1 and the irradiation light LA2 are respectively radiated from the second irradiating units 51 and 52, the first ejecting unit 22 and the second ejecting unit 24 move to the outside from the inner wall surface 128B of the light shielding wall 128, and the intensity of the reflected light LX1 and the reflected light LX2 of the irradiation light LA1 and the irradiation light LA2 toward the ejection surfaces 22C and 24C is low. Therefore, a distance between the second irradiating unit 51 and the second ejecting unit 24, and a distance between the second irradiating unit 52 and the first ejecting unit 22 may be narrowed. Moreover, the first ejecting unit 22 and the second ejecting unit 24 may move only near a location outside the light shielding wall 128. Accordingly, a relative moving amount between the shaping section main body 210 and the workbench 122 in the X-direction may be reduced. As a result, the shaping time may be shortened.

Here, the emission widths SA of the emission surfaces 51A and 52A of the second irradiating units 51 and 52 of the present exemplary embodiment in the moving direction (X-direction) respectively emitting the irradiation light LA1 and the irradiation light LA2 are set such that the end portion VT of the three-dimensional object V on the upstream side in the moving direction shaped on the workbench 122 is able to be irradiated with the irradiation light LA1 and the irradiation light LA2 in a state where the first ejecting unit 22 and the second ejecting unit 24 of the ejector unit 20 move to the outside from the inner wall surface 128B of the light shielding wall 128 of the workbench 122 (see Figs. 4B and 5B).

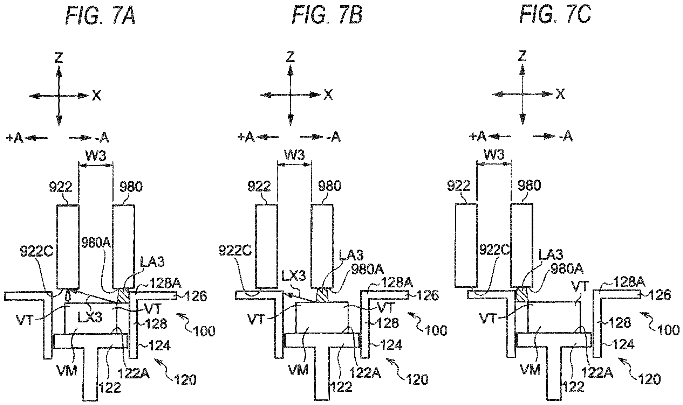

In contrast, in the comparative example illustrated in Figs. 7A, 7B, and 7C, the emission width of an emission surface 980A in the moving direction (X-direction) having a width narrower than those of the second irradiating units 51 and 52 of the present exemplary embodiment and emitting irradiation light LA3 is set to a width in which the end portion VT of the three-dimensional object V on the upstream side in the moving direction needs to be irradiated in a state where an ejecting unit 922 is positioned on the inside from the inner wall surface of the light shielding wall 128 of the workbench 122.

Accordingly, as illustrated in Figs. 7A and 7B, when the ejecting unit 922 moves on the inside of the light shielding wall 128 of the workbench 122, the reflected light LX hits an ejection surface 922C of the ejecting unit 922 without being blocked by the light shielding wall 128. Therefore, compared to the present exemplary embodiment, the intensity of reflected light LX3 becomes significant. Since the intensity of the reflected light LX3 radiated to the ejection surface 922C of the ejecting unit 922 is significant, there is a need to widen the distance between an irradiating unit 980 and the ejecting unit 922. Moreover, unless the ejecting unit 922 moves to a position away from the outside of the light shielding wall 128, the three-dimensional object V in its entirety may not be able to be irradiated. Accordingly, compared to the present exemplary embodiment, a moving amount of the shaping section main body in the X-direction with respect to the workbench 122 increases. As a result, the shaping time is lengthened.

In other words, when the emission width SA of the emission surfaces 51 A and 52A of the second irradiating units 51 and 52 of the present exemplary embodiment in the moving direction (X-direction) respectively emitting the irradiation light LA1 and the irradiation light LA2 are set such that at least the end portion VT of the three-dimensional object V on the upstream side in the moving direction shaped on the workbench 122 is able to be irradiated with the irradiation light LA1 and the irradiation light LA2 in a state where the first ejecting unit 22 and the second ejecting unit 24 move to the outside from the light shielding wall 128 of the workbench 122, a moving amount of the shaping section main body in the X-direction with respect to the workbench 122 is reduced, and thus, the shaping time is shortened.

As illustrated in Fig. 4B, when moving in the positive A-direction, the second ejecting unit 24 moves near a location outside the light shielding wall 128 in the positive A-direction and stops for a reversal operation. Then, before the irradiation light LA1 is radiated from the second irradiating unit 51, the light shielding shutter 41 is moved until the lower end portion 41A is positioned on a side lower than the upper end portion 128A of the light shielding wall 128. Accordingly, the reflected light LX1 is blocked by the light shielding shutter 41, and thus, the intensity of light hitting the ejection surface 24C of the second ejecting unit 24 is reduced.

As illustrated in Fig. 5B, when moving in the negative A-direction, the first ejecting unit 22 moves near a location outside the light shielding wall 128 in the negative A-direction and stops for a reversal operation. Then, before the irradiation light LA2 is radiated from the second irradiating unit 52, the light shielding shutter 42 is moved until the lower end portion 42A is positioned on a side lower than the upper end portion 128A of the light shielding wall 128. Accordingly, the reflected light LX2 is blocked by the light shielding shutter 42, and thus, the intensity of light hitting the ejection surface 22C of the first ejecting unit 22 is reduced.

When moving in the positive A-direction (forward path), the surfaces of the droplets DA and DB after radiation are flattened by the flattening roller 46. Moreover, when moving in the negative A-direction (backward path), the surfaces of the droplets DA and DB before radiation are flattened by the same flattening roller 46.

Here, it is possible to consider a case where multiple flattening rollers 46 are provided in the carriage CR. Particularly, in a case where multiple ejecting units are included, there are provided multiple flattening rollers 46. For example, in a case where the carriage CR is provided with two flattening rollers such as a flattening roller 46 which performs flattening when moving in the forward direction and another flattening roller 46 which performs flattening when moving in the backward direction, there is a need to control the positional accuracy in the heights of the two flattening rollers 46 with high precision (for example, within 10% of the layer LR), and it is extremely difficult to control the positional accuracy in the heights of the two flattening rollers 46 with high precision. As a result, when two flattening rollers 46 are provided, there is concern that precision in flattening is deteriorated.

However, in the shaping apparatus 10 of the present exemplary embodiment, the carriage CR is provided with only one flattening roller 46. Accordingly, there is no need to align the positions of the heights of multiple flattening rollers 46 with each other. Therefore, compared to a case where multiple flattening rollers 46 are provided in the carriage CR, precision in flattening of a shaping liquid G is improved.

### Modification Example

Subsequently, a modification example of the present exemplary embodiment will be described. Specifically, a shaping method in a case of shaping a three-dimensional object V having a width narrow in the X-direction will be described.

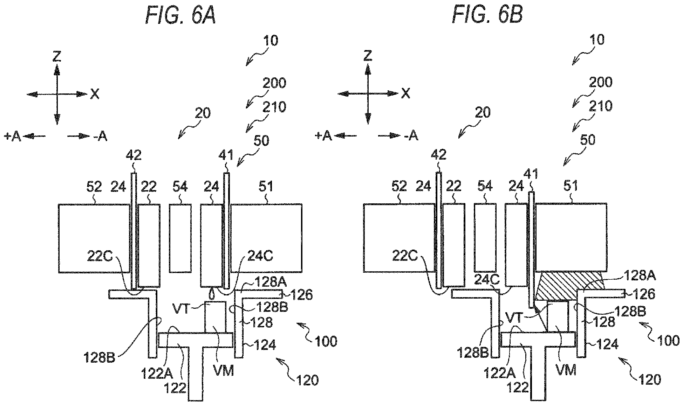

As illustrated in Figs. 6A and 6B, in a case where the shaping section main body 210 moves relatively in the positive A-direction, when the second ejecting unit 24 passes through the three-dimensional object V shaped on the workbench 122, the light shielding shutter 41 is moved until the lower end portion 41A is positioned on a side lower than the upper end portion 128A of the light shielding wall 128. In the present modification example, the lower end portion 41A is moved to a position on a side lower than the end portion VT of the three-dimensional object V on the upstream side. Then, the movement in the positive A-direction stops, and the irradiation light LA1 is radiated from the second irradiating unit 51. Thereafter, a reversal operation is performed, and the lower end portion 41A moves in the negative A-direction.

Accordingly, it is clear from the comparison between Figs. 6B and 4B that the relative moving amount between the shaping section main body 210 and the workbench 122 in the X-direction in the modification example (Fig. 6B) is less than the other. As a result, the modification example may shorten the shaping time.

### «Second Exemplary Embodiment»

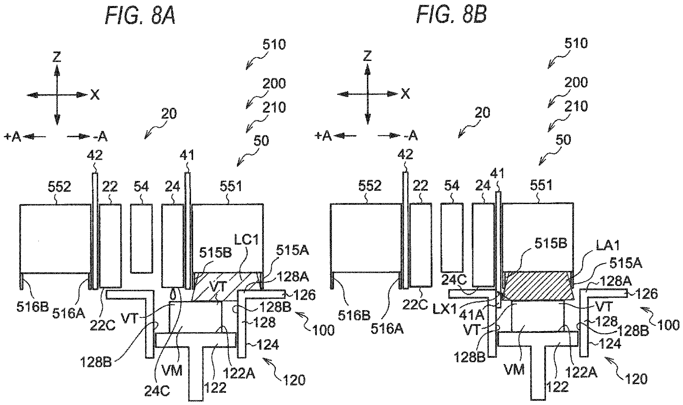

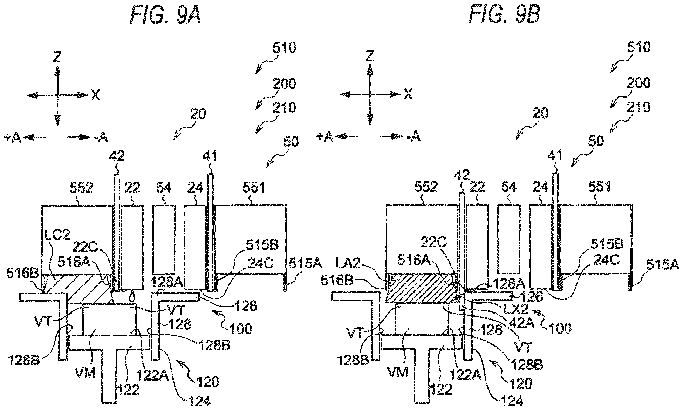

An example of a shaping apparatus according to a second exemplary embodiment of the invention will be described. Incidentally, members the same as those in the first exemplary embodiment are referenced correspondingly, and redundant description will be omitted. In addition, the second exemplary embodiment is the same as the first exemplary embodiment, except only a part of an irradiator unit. Therefore, a different constituent part of the irradiator unit will be chiefly explained, and description of the other part will be omitted. Although not shown in Figs. 8A and 8B and Figs. 9A and 9B, a flattening roller 46 (see Fig. 1 and so on) is provided.

### Irradiator Unit

As shown in Figs. 8A and 8B and Figs. 9A and 9B, an irradiator unit 50 is configured to radiate irradiation light LA1, irradiation light LA2, irradiation light LB, low-intensity light LC1, and low-intensity light LC2 from a first irradiating unit 54 and second irradiating units 551 and 552 having plane emission light sources toward a base surface 122A of a workbench 122 from one end side to the other end side in a longitudinal direction (Y-direction). Applied droplets DA (model material) and applied droplets DB (support material) are cured by being irradiated with the irradiation light LA1, the irradiation light LA2, the irradiation light LB, the low-intensity light LC1, and the low-intensity light LC2.

Incidentally, in the present exemplary embodiment, the intensity of the irradiation light LA1 of the second irradiating unit 551 and the intensity of the irradiation light LA2 of the second irradiating unit 552 are made substantially equal to each other, while the intensity of the irradiation light LB of the first irradiating unit 54 is lower than the intensity of the irradiation light LA1, LA2 of each second irradiating unit 551, 552.

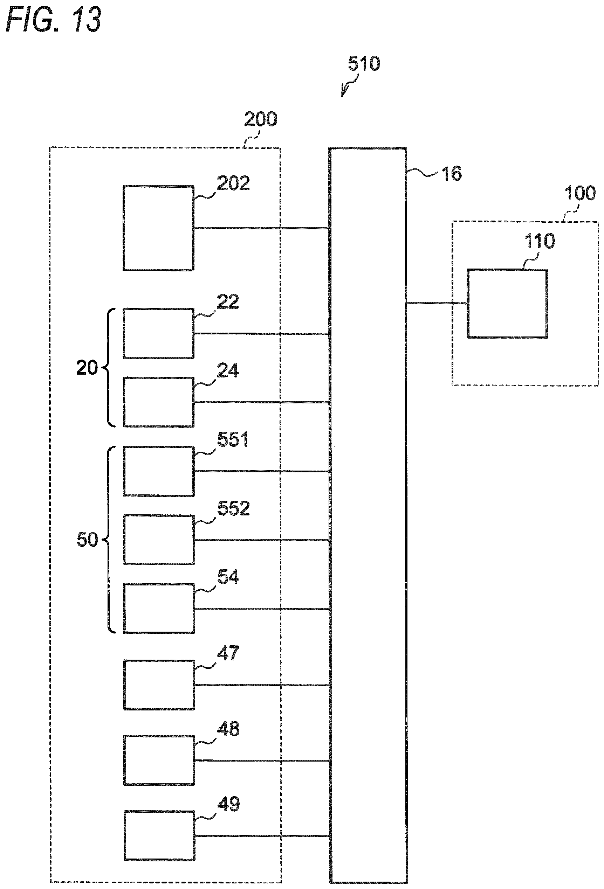

In addition, the second irradiating unit 551, 552 is also configured to emit low-intensity light LC1, LC2 lower in intensity than the irradiation light LA1, LA2. That is, the second irradiating unit 551, 552 can radiate both the irradiation light LA1, LA2 and the low-intensity light LC1, LC2. In addition, the second irradiating unit 551, 552 is controlled by a controller 16 (see Fig. 13) so as to be changed over between the irradiation light LA1, LA2 and the low-intensity light LC1, LC2. In the present exemplary embodiment, the intensity of the low-intensity light LC1, LC2 is made equal to the intensity of the irradiation light LB. Further, the low-intensity light LC1, LC2 and the irradiation light LB are radiated for temporary curing (semi-curing) before curing by the irradiation light LA1, LA2. In some cases, the temporary curing (semi-curing) by the low-intensity light LC1, LC2 and the irradiation light LB will be also referred to as "curing". On the other hand, in some cases, the curing by the irradiation light LA1, LA2 will be referred to as "main curing".

### Second Irradiating Unit

The second irradiating unit 551 and the second irradiating unit 552 have structures similar to each other except that the disposed positions are different from each other. The second irradiating units 551 and 552 have widths in the moving direction (X-direction) wider than that of the first irradiating unit 54. The second irradiating unit 552 is disposed outside a first ejecting unit 22 in the X-direction (outside in the positive A-direction), and the second irradiating unit 551 is disposed outside a second ejecting unit 24 in the X-direction (outside in the negative A-direction).

Here, an emission width SA (see Fig. 1) in a moving direction (X-direction) of an emission surface 51A, 52A of each second irradiating unit 551, 552 emitting the irradiation light LA1, LA2 and the low-intensity light LC1, LC2 is set, in the same manner as in the first embodiment, such that at least an end portion VT of a three-dimensional object V on an upstream side in the moving direction shaped on the workbench 122 is able to be irradiated with the irradiation light LA1, LA2 in a state where the first ejecting unit 22 and the second ejecting unit 24 of the ejector unit 20 moves to the outside in the X-direction from an inner wall surface 128B of a light shielding wall 128 of the workbench 122.

In other words, as illustrated in Fig. 8B, in a state where the second ejecting unit 24 moves to the outside in the positive A-direction from the inner wall surface 128B of the light shielding wall 128, the end portion VT of the three-dimensional object V on the upstream side in the negative A-direction is able to be irradiated with the second irradiating unit 551. As illustrated in Fig. 9B, in a state where the first ejecting unit 22 moves to the outside in the negative A-direction from the inner wall surface 128B of the light shielding wall 128, the end portion VT of the three-dimensional object V on the upstream side in the positive A-direction is able to be irradiated with the second irradiating unit 552.

In the shaping apparatus 510 of the present exemplary embodiment, the emission width SA (see Fig. 1) is set such that the end portion VT of the three-dimensional object V on the upstream side in a case of being shaped closest to the inner wall surface 128B of the light shielding wall 128 is able to be irradiated with the irradiation light LA1 and the irradiation light LA2.

Moreover, in the present exemplary embodiment, the emission width SA (see Fig. 1) is set such that the entire area of the three-dimensional object V in the moving direction shaped on the workbench 122 is able to be irradiated in a state where the first ejecting unit 22 and the second ejecting unit 24 move outside the light shielding wall 128 of the workbench 122 in the X-direction.

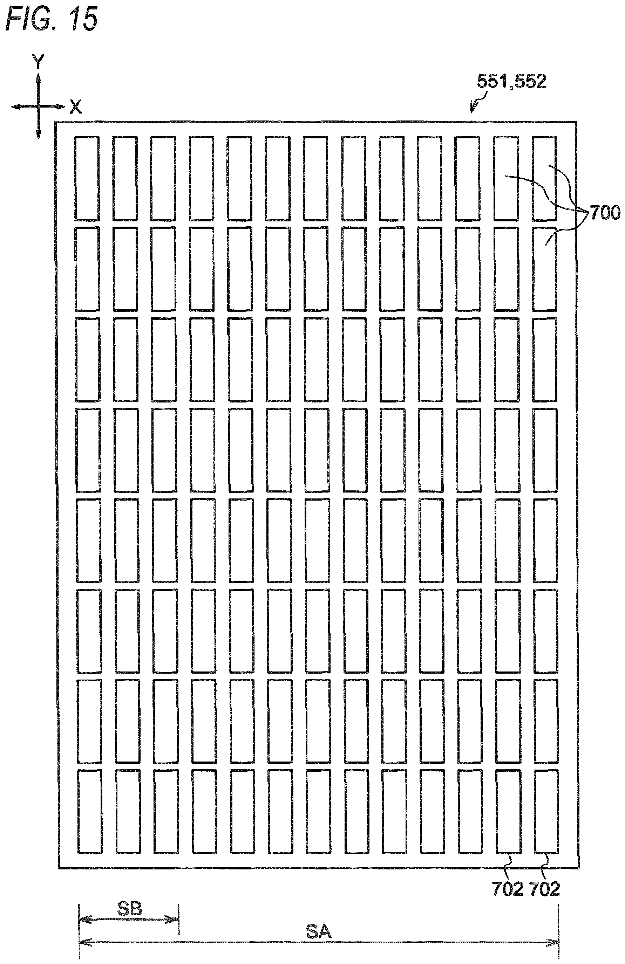

Further, as shown in Fig. 15, each second irradiating unit 551, 552 serves as a plane emission light source, which is constituted by LEDs (Light Emitting Diodes) 700 as an example of a plurality of light emitting elements. In the present exemplary embodiment, the LEDs 700 has a configuration in which arrays 702 arranged in the Y-direction are arranged in the X-direction (moving direction).

Furthermore, the controller 16 (see Fig. 13) controls a voltage (or a current) to be applied to each LED 700. In this configuration, when voltages (or currents) applied to the LEDs 700 of the second irradiating unit 551 and the second irradiating unit 552 are reduced to make their illuminances lower than those of the irradiation light LA1 and the irradiation light LA2, the low-intensity light LC1 and the low-intensity light LC2 lower in intensity than the irradiation light LA1 and the irradiation light LA2 can be emitted.

### Light Shielding Plate

As illustrated in Figs. 8A and 8B and Figs. 9A and 9B, light shielding plates 515A and 515B are provided outside the second irradiating unit 551 in the X-direction. Lower end portions of the light shielding plates 515A and 515B are located on an upper side from an upper end portion 128A of the light shielding wall 128. The light shielding plate 515A is suspended downward from an end portion of the second irradiating unit 551 in the negative A-direction of the X-direction, and the light shielding plate 515B is suspended downward from an end portion of the second irradiating unit 551 in the positive A-direction of the X-direction.

In the same manner, light shielding plates 516A and 516B are provided outside the second irradiating unit 552 in the X-direction. Lower end portions of the light shielding plates 516A and 516B are located on the upper side from the upper end portion 128A of the light shielding wall 128. The light shielding plate 516A is suspended downward from an end portion of the second irradiating unit 552 in the negative A-direction of the X-direction, and the light shielding plate 516B is suspended downward from an end portion of the second irradiating unit 552 in the positive A-direction of the X-direction.

### Method of Shaping Three-dimensional Object

Subsequently, an example of a method of shaping the three-dimensional object V (shaping object VM) performed by the shaping apparatus 510 of the present exemplary embodiment will be described. Description about the flattening roller 46 is similar to that in the first embodiment. Therefore, the description will be omitted.

When the controller 16 (see Fig. 13) receives data from an external apparatus and the like, the controller 16 converts data (that is, three-dimensional data) of the three-dimensional object V (the shaping object VM and a support portion VN) included in the data into data (that is, two-dimensional data) of multiple layers LR (see Fig. 1).

Subsequently, the controller 16 causes a working section driving unit 110 to control a working section main body 120 and to move the working section main body 120 in the negative A-direction such that a shaping section main body 210 moves relatively with respect to the workbench 122 in the positive A-direction. Subsequently, the droplets DA (model material) and the droplets DB (support material) are ejected from a model material ejecting head 22A and a support material ejecting head 22B of the first ejecting unit 22 configured to be included in the shaping section main body 210. The controller 16 causes the first irradiating unit 54 having a narrow width to irradiate the applied droplets DA (model material) and the applied droplets DB (support material) with the irradiation light LB. When the droplets DA and the droplets DB are applied to the base surface 122A of the workbench 122 and are moved to locations below the first irradiating unit 54, the droplets DA and the droplets DB are irradiated with the irradiation light LB. After the droplets DA and the droplets DB pass through, radiation of the irradiation light LB stops.

Subsequently, the controller 16 (see Fig. 13) causes the model material ejecting head 24A and the support material ejecting head 24B of the second ejecting unit 24 to eject the droplets DA (model material) and the droplets DB (support material) in accordance with a relative movement of the shaping section main body 210 in the positive A-direction (forward direction).

As illustrated in Fig. 8A, when the second ejecting unit 24 is moving inside the light shielding wall 128 of the workbench 122, the low-intensity light LC1 is radiated from the second irradiating unit 551. Specifically, the second irradiating unit 551 starts emitting the low-intensity light LC1 immediately before passing over the light shielding wall 128.

Then, as shown in Fig. 8B, the control second 16 causes the second irradiating unit 551 to radiate the low-intensity light LC1 until the second ejecting unit 24 moves near a location outside the light shielding wall 128 in the positive A-direction, stops and turns over. As soon as the second ejecting unit 24 stops and turns over, the controller 16 changes over the second irradiating unit 551 to radiate the irradiation light LA1.

Before performing radiation of the irradiation light LA1, a light shielding shutter 41 is moved until a lower end portion 41A of the light shielding shutter 41 is positioned on a side lower than the upper end portion 128A of the light shielding wall 128.

In this manner, when the applied droplets DA (mode material) and the applied droplets DB (support material) are applied to the base surface 122A of the workbench 122 and are moved to locations below the second irradiating unit 551, the droplets DA and the droplets DB are irradiated with the irradiation light LA1, thereby being cured. Accordingly, a layer LR1 (first layer) is formed through scanning in one direction (positive A-direction).

A layer LR2 (second layer) is formed after the workbench 122 is lowered as much as the thickness of the layer LR while performing an operation of forming the above-described layer LR1 (first layer) by moving the shaping section main body 210 relatively with respect to the workbench 122 in the negative A-direction (backward direction).

In other words, the controller 16 causes the working section main body 120 to move in the positive A-direction such that the shaping section main body 210 moves relatively with respect to the workbench 122 in the negative A-direction. Subsequently, the droplets DA (model material) and the droplets DB (support material) are ejected from the model material ejecting head 24A and the support material ejecting head 24B of the second ejecting unit 24 configured to be included in the shaping section main body 210.

The controller 16 causes the first irradiating unit 54 having a narrow width to irradiate the applied droplets DA (model material) and the applied droplets DB (support material) with the irradiation light LB. When the droplets DA and the droplets DB are applied to the layer LR1 (first layer) and are moved to locations below the irradiator unit 50, the droplets DA and the droplets DB are irradiated with the irradiation light LB, thereby being temporarily cured. After the droplets DA and the droplets DB pass through, radiation of the irradiation light LB stops.

As illustrated in Fig. 9A, when the first ejecting unit 22 is moving inside the light shielding wall 128 of the workbench 122, the low-intensity light LC2 is radiated from the second irradiating unit 552. Specifically, the second irradiating unit 552 starts emitting the low-intensity light LC2 immediately before passing over the light shielding wall 128.

Then, as shown in Fig. 9B, the control second 16 (see Fig. 13) causes the second irradiating unit 552 to radiate the low-intensity light LC2 until the first ejecting unit 22 moves near a location outside the light shielding wall 128 in the negative A-direction, stops and turns over. As soon as the first ejecting unit 22 stops and turns over, the controller 16 changes over the second irradiating unit 552 to radiate the irradiation light LA2.

Before performing radiation of the irradiation light LA2, a light shielding shutter 42 is moved until a lower end portion 42A of the light shielding shutter 42 is positioned on the side lower than the upper end portion 128A of the light shielding wall 128.

In this manner, when the applied droplets DA (mode material) and the applied droplets DB (support material) are applied to the base surface 122A of the workbench 122 and are moved to locations below the second irradiating unit 552, the droplets DA and the droplets DB are irradiated with the irradiation light LA2, thereby being cured. Accordingly, a layer LR2 (second layer) is formed through scanning in one direction (negative A-direction).

The layers LR for the third and succeeding layers are formed by repeating an operation similar to the above-described operations of forming the layer LR1 (first layer) and the layer LR2 (second layer).

Ejecting the droplets DA and the droplets DB, and curing the droplets DA and the droplets DB performed through radiation of the irradiation light LA1, the irradiation light LA2, the irradiation light LB, the low-intensity light LC1 and the low-intensity light LC2 are repeated, thereby shaping the three-dimensional object V on the workbench 122 by stacking the layers LR. As described above, the support portion VN is removed from the three-dimensional object V, and then, the shaping object VM having a desired shape is able to be obtained. In the shaping object VM, the support portion VN is not shaped in a case where there is no portion of which a lower portion is an empty space. Therefore, in some cases, the droplets DB are not ejected from the support material ejecting heads 22B and 24B.

### Operation

Subsequently, an operation of the present exemplary embodiment will be described. Incidentally, description about a part of the operation similar to that in the first embodiment will be omitted.

The droplets DA and the droplets DB ejected and applied from the first ejecting unit 22 and the second ejecting unit 24 are not irradiated with the irradiation light LA1 and the irradiation light LA2 until the first ejecting unit 22 and the second ejecting unit 24 move near locations outside the light shielding wall 128 in the negative A-direction or the positive A-direction, stop and turn over.

However, the droplets DA and the droplets DB are irradiated with the low-intensity light LC1 and the low-intensity light LC2 by the second irradiating units 551 and 552 during a period after the droplets DA and the droplets DB are applied and before the first ejecting portion 22 and the second ejecting portion 24 move near locations outside the light shielding wall 128 in the negative A-direction or the positive A-direction, stop and turn over. Thus, the droplets DA and the droplets DB are temporarily cured (semi-cured), so that collapse in the shape of the shaping object VM caused by dripping can be suppressed. As a result, the shaping object VM can be improved in resolution, compared with a case where the low-intensity light LC1 and the low-intensity light LC2 are not radiated.

In this manner, the second irradiating units 551 and 552 have two functions as main curing light sources for emitting the irradiation light LA1 and the irradiation light LA2 for mainly curing the droplets DA and the droplets DB, and temporary curing light sources (pining light sources) for emitting the low-intensity light LC1 and the low-intensity light LC2 for temporarily curing the droplets DA and the droplets DB.

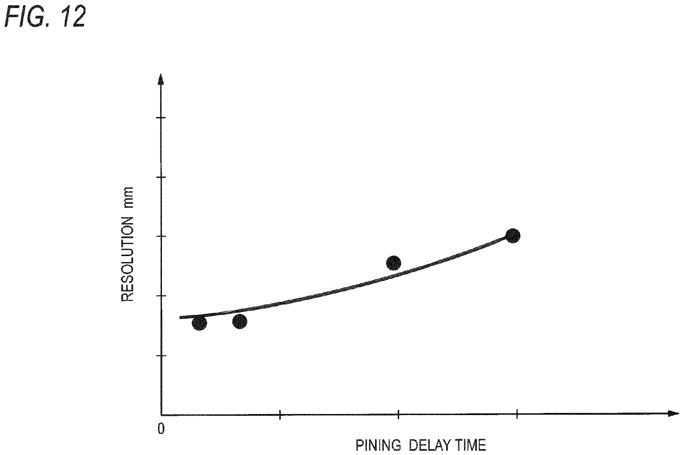

Here, Fig. 12 is a graph illustrating a relationship between a pinning delay time and a resolution. The "pining delay time" means a time elapsing between when droplets are applied and when low-intensity light is radiated.

From the graph of Fig. 12, it is understood that the resolution is worse and the collapse in a shape caused by dripping is more significant as the pining delay time is longer, that is, the time elapsing between when the droplets are applied and when the low-intensity light is radiated is longer. Accordingly, it is understood that when the applied droplets DA and the applied droplets DB are irradiated with the low-intensity light LC1 and the low-intensity light LC2, the collapse in the shape of the shaping object VM caused by dripping can be suppressed, and the resolution can be improved.

In spite of the low-intensity light LC1 and the low-intensity light LC2 radiated from the second irradiating units 551 and 552 when the first ejecting unit 22 and the second ejecting unit 24 are moving inside the light shielding wall 128 of the workbench 122, the intensity of reflected light with which an ejection surface 22C of the first ejecting unit 22 and an ejection surface 24C of the second ejecting unit 24 are irradiated is low because the intensity of each low-intensity light LC1, LC2 is lower than the intensity of each irradiation light LA1, LA2. Thus, influence which may cure shaping liquid on the ejection surfaces 22C and 24C can be reduced.

In addition, in the present exemplary embodiment, the light shielding plates 515A, 515B, 516A, 516B are provided outside the second irradiating units 551 and 552 in the X-direction. Accordingly, spreads of the irradiation light LA1, the irradiation light LA2, the low-intensity light LC1 and the low-intensity light LC2 can be suppressed so that the intensity of reflected light with which the ejection surface 22C of the first ejecting unit 22 and the ejection surface 24C of the second ejecting unit 24 are irradiated can be suppressed.

Further, in the present exemplary embodiment, each of the second irradiating unit 551 and the second irradiating unit 552 is constituted by a plurality of LEDs 700. The controller 16 (see Fig. 13) controls the magnitude of a voltage (or a current) to be applied to each LED 700 so that both the irradiation light LA1, LA2 and the low-intensity light LC1, LC2 can be emitted easily.

It will go well if the intensity of the low-intensity light LC1, LC2 is lower than the intensity of the irradiation light LA1, LA2. As for the lower limit of the intensity of the low-intensity light LC1, LC2, it will be go well if the intensity is not lower than an intensity with which curing the shaping liquid can be started. On the other hand, as for the upper limit of the intensity of the low-intensity light LC1, LC2, it is preferable that the intensity is not higher than an intensity with which the shaping liquid on the ejection surface 22C of the first ejecting unit 22 and the ejection surface 24C of the second ejecting unit 24 can be prevented from being cured to cause any problem by the reflected light of the low-intensity light LC1, LC2. More specifically, it is preferable that the intensity is about 1/5 to 1/10 of the intensity of the irradiation light LA1, LA2.

### «Third Exemplary Embodiment»

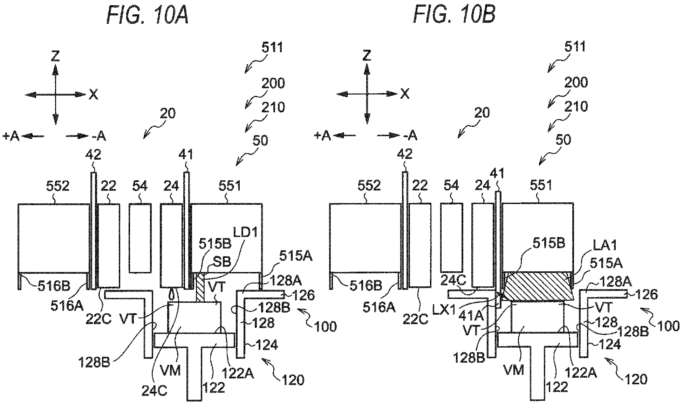

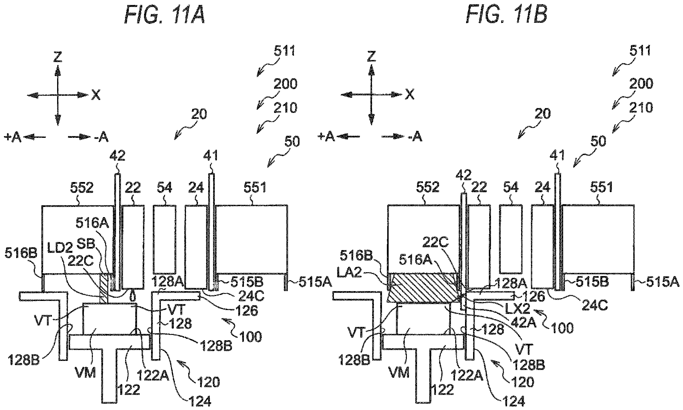

An example of a shaping apparatus according to a third exemplary embodiment of the invention will be described. Incidentally, members the same as those in the first exemplary embodiment and the second exemplary embodiment are referenced correspondingly, and redundant description will be omitted. In addition, the third exemplary embodiment is the same as the second exemplary embodiment, except only a control part of a second irradiating unit of an irradiator unit. Therefore, only the different part will be chiefly explained, and description of the other part will be omitted. Although not shown in Figs. 10A and 10B and Figs. 11A and 11B, a flattening roller 46 (see Fig. 1 and so on) is provided.

### Second Irradiating Unit

As shown in Fig. 15, each second irradiating unit 551, 552 of a shaping apparatus 511 according to the present exemplary embodiment serves as a plane emission light source, which is constituted by LEDs (Light Emitting Diodes) 700 as an example of a plurality of light emitting elements. In the present exemplary embodiment, the LEDs 700 has a configuration in which arrays 702 arranged in the Y-direction are arranged in the X-direction (moving direction).

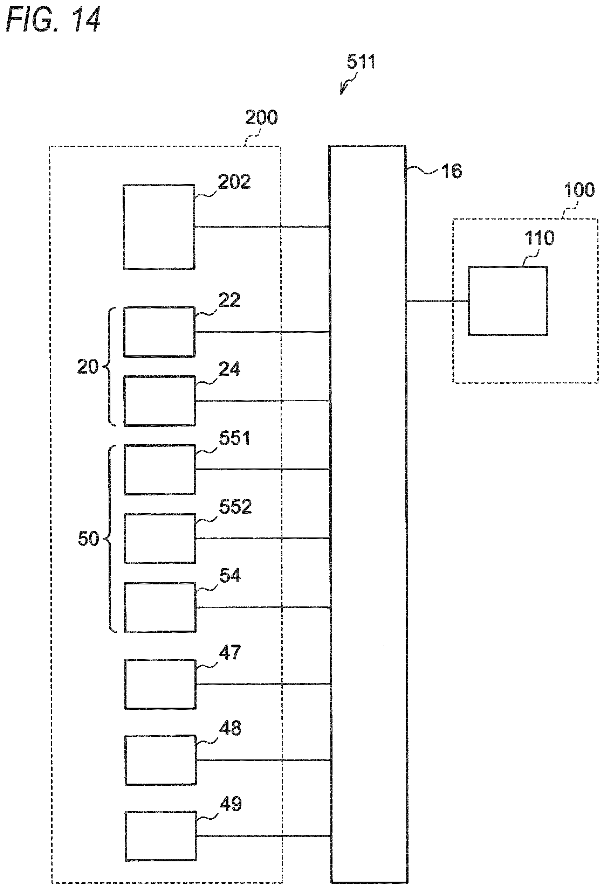

The controller 16 (see Fig. 14) can control the LEDs 700 to be electrified and lit. When the arrays 702 to be lit in each second irradiating unit 551, 552 are reduced to narrow the emission width SA into an emission width SB, illuminance can be made lower than that of each irradiation light LA1, LA2. Thus, low-intensity light LD1, LD2 (see Figs. 10A and 10B and Figs. 11A and 11B) lower in intensity than the irradiation light LA1, LA2 is emitted. Each LED 700 has a fixed output (voltage or current) between the radiation of the emission width SA and the radiation of the emission width SB.

### Method of Shaping Three-dimensional Object

Subsequently, an example of a method of shaping a three-dimensional object V (shaping object VM) performed by the shaping apparatus 511 of the present exemplary embodiment will be described. Description about the flattening roller 46 is similar to that in the first embodiment. Therefore, the description will be omitted.

When the controller 16 (see Fig. 14) receives data from an external apparatus and the like, the controller 16 converts data (that is, three-dimensional data) of the three-dimensional object V (the shaping object VM and a support portion VN) included in the data into data (that is, two-dimensional data) of multiple layers LR (see Fig. 1).

Subsequently, the controller 16 causes a working section driving unit 110 to control a working section main body 120 and to move the working section main body 120 in the negative A-direction such that a shaping section main body 210 moves relatively with respect to the workbench 122 in the positive A-direction. Subsequently, the droplets DA (model material) and the droplets DB (support material) are ejected from a model material ejecting head 22A and a support material ejecting head 22B of the first ejecting unit 22 configured to be included in the shaping section main body 210. The controller 16 causes the first irradiating unit 54 having a narrow width to irradiate the applied droplets DA (model material) and the applied droplets DB (support material) with the irradiation light LB. When the droplets DA and the droplets DB are applied to the base surface 122A of the workbench 122 and are moved to locations below the first irradiating unit 54, the droplets DA and the droplets DB are irradiated with the irradiation light LB. After the droplets DA and the droplets DB pass through, radiation of the irradiation light LB stops.

Subsequently, the controller 16 (see Fig. 14) causes the model material ejecting head 24A and the support material ejecting head 24B of the second ejecting unit 24 to eject the droplets DA (model material) and the droplets DB (support material) in accordance with a relative movement of the shaping section main body 210 in the positive A-direction (forward direction).

As illustrated in Fig. 10A, when the second ejecting unit 24 is moving inside the light shielding wall 128 of the workbench 122, the low-intensity light LD1 is radiated from the second irradiating unit 551. Specifically, the second irradiating unit 551 starts emitting the low-intensity light LD1 immediately before passing over the light shielding wall 128.

Then, as shown in Fig. 10B, the control second 16 causes the second irradiating unit 551 to radiate the low-intensity light LD1 until the second ejecting unit 24 moves near a location outside the light shielding wall 128 in the positive A-direction, stops and turns over. As soon as the second ejecting unit 24 stops and turns over, the controller 16 changes over the second irradiating unit 551 to radiate the irradiation light LA1.

Before performing radiation, a light shielding shutter 41 is moved until a lower end portion 41A of the light shielding shutter 41 is positioned on a side lower than the upper end portion 128A of the light shielding wall 128.

In this manner, when the applied droplets DA (mode material) and the applied droplets DB (support material) are applied to the base surface 122A of the workbench 122 and are moved to locations below the second irradiating unit 551, the droplets DA and the droplets DB are irradiated with the irradiation light LA1, thereby being cured. Accordingly, a layer LR1 (first layer) is formed through scanning in one direction (positive A-direction).

A layer LR2 (second layer) is formed after the workbench 122 is lowered as much as the thickness of the layer LR while performing an operation of forming the above-described layer LR1 (first layer) by moving the shaping section main body 210 relatively with respect to the workbench 122 in the negative A-direction (backward direction).

In other words, the controller 16 causes the working section main body 120 to move in the positive A-direction such that the shaping section main body 210 moves relatively with respect to the workbench 122 in the negative A-direction. Subsequently, the droplets DA (model material) and the droplets DB (support material) are ejected from the model material ejecting head 24A and the support material ejecting head 24B of the second ejecting unit 24 configured to be included in the shaping section main body 210.

The controller 16 causes the first irradiating unit 54 having a narrow width to irradiate the applied droplets DA (model material) and the applied droplets DB (support material) with the irradiation light LB. When the droplets DA and the droplets DB are applied to the layer LR1 (first layer) and are moved to locations below the irradiator unit 50, the droplets DA and the droplets DB are irradiated with the irradiation light LB, thereby being temporarily cured. After the droplets DA and the droplets DB pass through, radiation of the irradiation light LB stops.

As illustrated in Fig. 11A, when the first ejecting unit 22 is moving inside the light shielding wall 128 of the workbench 122, the low-intensity light LD2 is radiated from the second irradiating unit 552. Specifically, the second irradiating unit 552 starts emitting the low-intensity light LD2 immediately before passing over the light shielding wall 128.

Then, as shown in Fig. 11B, the control second 16 (see Fig. 14) causes the second irradiating unit 552 to radiate the low-intensity light LD2 until the first ejecting unit 22 moves near a location outside the light shielding wall 128 in the negative A-direction, stops and turns over. As soon as the first ejecting unit 22 stops and turns over, the controller 16 changes over the second irradiating unit 552 to radiate the irradiation light LA2.

Before performing radiation, a light shielding shutter 42 is moved until a lower end portion 42A of the light shielding shutter 42 is positioned on the side lower than the upper end portion 128A of the light shielding wall 128.

In this manner, when the applied droplets DA (mode material) and the applied droplets DB (support material) are applied to the base surface 122A of the workbench 122 and are moved to locations below the second irradiating unit 552, the droplets DA and the droplets DB are irradiated with the irradiation light LA2, thereby being cured. Accordingly, a layer LR2 (second layer) is formed through scanning in one direction (negative A-direction).

The layers LR for the third and succeeding layers are formed by repeating an operation similar to the above-described operations of forming the layer LR1 (first layer) and the layer LR2 (second layer).

Ejecting the droplets DA and the droplets DB, and curing the droplets DA and the droplets DB performed through radiation of the irradiation light LA1, the irradiation light LA2, the irradiation light LB, the low-intensity light LD1 and the low-intensity light LD2 are repeated, thereby shaping the three-dimensional object V on the workbench 122 by stacking the layers LR. As described above, the support portion VN is removed from the three-dimensional object V, and then, the shaping object VM having a desired shape is able to be obtained. In the shaping object VM, the support portion VN is not shaped in a case where there is no portion of which a lower portion is an empty space. Therefore, in some cases, the droplets DB are not ejected from the support material ejecting heads 22B and 24B.

### Operation

Subsequently, an operation of the present exemplary embodiment will be described. Incidentally, description about a part of the operation similar to that in the first embodiment will be omitted.

The droplets DA and the droplets DB ejected and applied from the first ejecting unit 22 and the second ejecting unit 24 are not irradiated with the irradiation light LA1 and the irradiation light LA2 until the first ejecting unit 22 and the second ejecting unit 24 move near locations outside the light shielding wall 128 in the negative A-direction or the positive A-direction, stop and turn over.

However, the droplets DA and the droplets DB are irradiated with the low-intensity light LD1 and the low-intensity light LD2 by the second irradiating units 551 and 552 during a period after the droplets DA and the droplets DB are applied and before the first ejecting portion 22 and the second ejecting portion 24 move near locations outside the light shielding wall 128 in the negative A-direction or the positive A-direction, stop and turn over. Thus, the droplets DA and the droplets DB are temporarily cured (semi-cured), so that collapse in the shape of the shaping object VM caused by dripping can be suppressed. As a result, the shaping object VM can be improved in resolution, compared with a case where the low-intensity light LD1 and the low-intensity light LD2 are not radiated.

In this manner, the second irradiating units 551 and 552 have two functions as main curing light sources for emitting the irradiation light LA1 and the irradiation light LA2 for mainly curing the droplets DA and the droplets DB, and temporary curing light sources (pining light sources) for emitting the low-intensity light LD1 and the low-intensity light LD2 for temporarily curing the droplets DA and the droplets DB.

In spite of the low-intensity light LD1 and the low-intensity light LD2 radiated from the second irradiating units 551 and 552 when the first ejecting unit 22 and the second ejecting unit 24 are moving inside the light shielding wall 128 of the workbench 122, the intensity of reflected light with which an ejection surface 22C of the first ejecting unit 22 and an ejection surface 24C of the second ejecting unit 24 are irradiated is low because the intensity of each low-intensity light LD1, LD2 is lower than the intensity of each irradiation light LA1, LA2. Thus, influence which may cure shaping liquid on the ejection surfaces 22C and 24C can be reduced.

In addition, in the present exemplary embodiment, light shielding plates 515A, 515B, 516A and 516B are provided outside the second irradiating units 551 and 552 in the X-direction. Accordingly, spreads of the irradiation light LA1, the irradiation light LA2, the low-intensity light LD1 and the low-intensity light LD2 can be suppressed so that the intensity of reflected light with which the ejection surface 22C of the first ejecting unit 22 and the ejection surface 24C of the second ejecting unit 24 are irradiated can be suppressed.

Further, in the present exemplary embodiment, each of the second irradiating unit 551 and the second irradiating unit 552 is constituted by a plurality of LED 700. The controller 16 reduces the arrays 702 of the LEDs 700 to be lit, so that the emission width SA can be reduced into the emission width SB. Thus, both the irradiation light LA1, LA2 and the low-intensity light LD1, LD2 can be emitted easily.

It will go well if the intensity of the low-intensity light LD1, LD2 is lower than the intensity of the irradiation light LA1, LA2. As for the lower limit of the intensity of the low-intensity light LD1, LD2, it will be go well if the intensity is not lower than an intensity with which curing the shaping liquid can be started. On the other hand, as for the upper limit of the intensity of the low-intensity light LD1, LD2, it is preferable that the intensity is not higher than an intensity with which the shaping liquid on the ejection surface 22C of the first ejecting unit 22 and the ejection surface 24C of the second ejecting unit 24 can be prevented from being cured to cause any problem by the reflected light of the low-intensity light LD1, LD2. More specifically, it is preferable that the intensity is about 1/5 to 1/10 of the intensity of the irradiation light LA1, LA2.

Incidentally, the number of arrays 702 to be lit with the low-intensity light LD1, LD2, that is, the emission width SB may be set suitably in accordance with a desired intensity. In addition, the positions of the arrays 702 to be lit do not have to be in an end portion in the Y-direction. The arrays 702 in a central portion may be lit in accordance with the shape of the three-dimensional object V.

### Others

The present invention is not limited to the above-described exemplary embodiment.

For example, the light shielding shutters 41 and 42 and the flattening roller 46 do not have to be provided.

For example, in the above-described exemplary embodiment, as illustrated in Fig. 2, the emission widths SA of the emission surfaces 51A and 52A of the second irradiating units 51 and 52 in the moving direction (X-direction) respectively emitting the irradiation light LA1 and the irradiation light LA2 are set such that the entire area of the three-dimensional object V in the moving direction shaped on the workbench 122 is able to be irradiated in a state where the first ejecting unit 22 and the second ejecting unit 24 move to the outside in the X-direction from the light shielding wall 128 of the workbench 122. However, the exemplary embodiment is not limited thereto.

The emission width SA is acceptable as long as the emission width SA is set such that at least the end portion VT of the three-dimensional object V on the upstream side in the moving direction shaped on the workbench 122 is able to be irradiated with the irradiation light LA1 and the irradiation light LA2 in a state where the first ejecting unit 22 and the second ejecting unit 24 move to the outside in the X-direction from the light shielding wall 128 of the workbench 122.

For example, in the configuration of the above-described exemplary embodiment, the first ejecting unit 22 and the second ejecting unit 24 are respectively disposed on both sides next to the first irradiating unit 54 having a narrow width, and the second irradiating unit 51 and the second irradiating unit 52 having wide widths are respectively disposed on the outsides of the second ejecting unit 24 and the first ejecting unit 22. However, the exemplary embodiment is not limited thereto. The exemplary embodiment may be configured to be provided with the first ejecting unit 22 and at least any one of the second irradiating unit 52 and the second irradiating unit 51.

For example, in the above-described exemplary embodiment, the model material and the support material are ultraviolet ray curing-type shaping liquid which is cured by being irradiated with ultraviolet rays. However, the exemplary embodiment is not limited thereto. The model material and the support material may be shaping liquid which is cured by being irradiated with light other than the ultraviolet rays. The irradiator unit 50 appropriately copes with a structure of emitting light which copes with the shaping liquid.

For example, in the above-described exemplary embodiment, the working section main body 120 in its entirety moves in the X-direction, and the workbench 122 moves in the Z-direction, thereby shaping the three-dimensional object V (shaping object VM). However, the exemplary embodiment is not limited thereto. The shaping section main body 210 may move in the X-direction, the Y-direction, and the Z-direction and shape the three-dimensional object V. Otherwise, the shaping section main body 210 may move in the X-direction, and the workbench 122 may move in the Z-direction. The point is that the structure is acceptable as long as the workbench 122 and the shaping section main body 210 move relatively in the X-direction and the Z-direction.

In the second exemplary embodiment and the third exemplary embodiment, each low-intensity light LC1, LC2, LD1, LD2 is emitted by reducing the voltage (or current) to be applied to the LEDs 700 as an example of the light emitting elements of the second irradiating units 551 and 552 or by reducing the arrays 702 to be lit. However, the invention is not limited thereto. For example, in another configuration, low-intensity light lower in intensity than the irradiation light LA1, LA2 may be emitted by thinning and reducing the number of LEDs 700 to be electrified (lit) (so that the LEDs 700 can be, for example, lit in a checker pattern). In addition, both the reduction in the number of LEDs 700 to be lit and the reduction in the voltage (or current) to be applied may be performed.

The irradiation light LB emitted by the first irradiating unit 54 also serves for temporary curing (semi-curing) in order to suppress dripping in the same manner as LC1, LC2, LD1 and LD2 emitted by the second irradiating units 551 and 552. Therefore, it will go well if the intensity of the irradiation light LB is lower than the intensity of the irradiation light LA1, LA2. As for the lower limit of the intensity of the irradiation light LB, it will go well if the intensity is not lower than the intensity with which curing the shaping liquid can be started. On the other hand, as for the upper limit of the intensity of the irradiation light LB, it is preferable that the intensity is not higher than the intensity with which the shaping liquid on the ejection surface 22C of the first ejecting unit 22 and the ejection surface 24C of the second ejecting unit 24 can be prevented from being cured to cause any problem by the reflected light of the irradiation light LB. More specifically, it is preferable that the intensity is about 1/5 to 1/10 of the intensity of the irradiation light LA1, LA2.

In the second exemplary embodiment and the third exemplary embodiment, the light shielding plates 515A, 515B, 516A, 516B, 615A, 615B, 616A and 616B are provided. However, the invention is not limited thereto. It is not necessary to provide any light shielding plate. In addition, similar light shielding plates may be provided in the first exemplary embodiment.

As a configuration of an image forming apparatus, various types of configurations are able to be applied without being limited to the configuration of the above-described exemplary embodiment. Moreover, it is not necessary to mention that various aspects are able to be executed without departing from the gist and scope of the present invention.

## Claims

1. A shaping apparatus comprising:
a bench unit that has a light shielding wall around the bench unit;
a moving unit that moves reciprocally and relatively with respect to the bench unit;
an ejecting unit that is provided at the moving unit and ejects a droplet of a light curable shaping liquid from an ejection surface toward the bench unit;
an irradiating unit that is provided at the moving unit and irradiates the ejected droplet on the bench unit with irradiation light;
a controller that controls the moving unit, the ejecting unit and the irradiating unit, and shapes a three-dimensional object on the bench unit by repeating ejecting the droplet and curing the droplet performed with the irradiation light, while moving the moving unit relatively with respect to the bench unit; and
an emission surface that is provided at the irradiating unit and emits the irradiation light of which an emission width in a moving direction of the moving unit is set such that, in a state where the ejecting unit is moved to the moving direction to be outside from the light shielding wall, at least an end portion, on an opposite side in the direction to which the ejecting unit is moved, of the three-dimensional object shaped on the bench unit is able to be irradiated with the irradiation light.

2. The shaping apparatus according to Claim 1,
wherein the emission width is set such that an entire area, in the moving direction, of the three-dimensional object shaped on the bench unit is able to be irradiated with the irradiation light in a state where the ejecting unit is moved to the moving direction to be outside from the light shielding wall.

3. The shaping apparatus according to Claim 1 or 2,
wherein a shutter that is able to be lowered more than an upper end portion of the light shielding wall is provided at the moving unit between the ejecting unit and the irradiating unit.

4. The shaping apparatus according to any one of Claims 1 to 3,
wherein the moving unit is provided with only one flattening unit which comes into contact with the ejected droplet on the bench unit to flatten the three-dimensional object.

5. The shaping apparatus according to any one of Claims 1 to 4, wherein:
the irradiating unit is capable of emitting low-intensity light lower in intensity than the irradiation light; and
the controller irradiates the three-dimensional object with the low-intensity light before the ejecting unit is moved to be outside from the light shielding wall.

6. The shaping apparatus according to Claim 5, wherein:
the irradiating unit reduces illuminance of the irradiation light to form the low-intensity light.

7. The shaping apparatus according to Claim 5, wherein:
the irradiating unit reduces the emission width of the irradiation light from the emission surface to form the low-intensity light.

8. The shaping apparatus according to any one of Claims 5 to 7, wherein:
the irradiating unit comprises element arrays in the moving direction, each of the element arrays comprising light emitting elements arrayed in line in a direction perpendicular to the moving direction.
